**Europäisches Patentamt**

**European Patent Office**

**Office européen des brevets**

(19)

(11) **EP 1 194 708 B1**

(12) **EUROPÄISCHE PATENTSCHRIFT**

| | |
|---|---|
| (45) Veröffentlichungstag und Bekanntmachung des Hinweises auf die Patenterteilung:<br>**02.01.2004 Patentblatt 2004/01** | (51) Int Cl.$^7$: **F16H 19/00** |
| (21) Anmeldenummer: **00954507.0** | (86) Internationale Anmeldenummer:<br>**PCT/EP2000/006746** |
| (22) Anmeldetag: **14.07.2000** | (87) Internationale Veröffentlichungsnummer:<br>**WO 2001/006148 (25.01.2001 Gazette 2001/04)** |

(54) **ANTRIEBSVORRICHTUNG MIT EINEM UNRUNDGETRIEBE**

DRIVE DEVICE COMPRISING AN ECCENTRIC GEARING

DISPOSITIF D'ENTRAINEMENT DOTE D'UNE TRANSMISSION EXCENTRIQUE

| | |
|---|---|
| (84) Benannte Vertragsstaaten:<br>**DE FR GB IT** | (74) Vertreter: **Göhring, Robert, Dipl.-Ing. et al**<br>**Patentanwälte**<br>**Westphal, Mussgnug**<br>**Am Riettor 5**<br>**78048 Villingen-Schwenningen (DE)** |
| (30) Priorität: **16.07.1999 DE 19932876** | |
| (43) Veröffentlichungstag der Anmeldung:<br>**10.04.2002 Patentblatt 2002/15** | (56) Entgegenhaltungen:<br>**EP-A- 0 181 631     EP-A- 0 918 961**<br>**DE-A- 19 739 851     DE-C- 910 509**<br>**FR-A- 452 468** |
| (73) Patentinhaber: **IMS MORAT SÖHNE GmbH**<br>**D-78166 Donaueschingen (DE)** | |
| (72) Erfinder: **GRILL, Joachim**<br>**71149 Bondorf (DE)** | |

EP 1 194 708 B1

**Beschreibung**

Die Erfindung bezieht sich auf eine Antriebsvorrichtung mit einem Unrundgetriebe. Eine gattungsgemäße Antriebsvorrichtung ist aus DE-A-19 739 851 bekannt.

In vielen Anwendungsfällen von Getrieben wird ein maximales Abtriebsmoment nur an einer Stellung benötigt. Solche Anforderungen treten beispielsweise bei Getrieben auf, die eine Schließfunktion erfüllen sollen. Dies kann in der Gebäudetechnik ein Fensterschließer oder in der Automobiltechnik eine Zuziehhilfe sein, oder ein Getriebe zum Schließen von Luftklappen.

Erfolgt der Antrieb über einen Elektromotor und wird ein Getriebe mit konstanter Übersetzung verwendet, so ergibt sich der Nachteil, daß die Höhe der Übersetzung auf der einen Seite so hoch sein muß, daß mit dem verwendeten Motor das maximale Moment erreicht werden kann. Dies erfordert in der Regel eine hohe Übersetzung. Auf der anderen Seite bedeutet eine hohe Übersetzung auch eine lange Stellzeit des Getriebes. Die Stellzeit ist bei vielen Anwendungen begrenzt, so z.B. bei Lüftungsklappen, die im Brandfall schließen müssen, bei Klimaklappenantrieben oder bei Fensterschließern.

Um die Stellzeit in den geforderten Grenzen zu halten, muß in diesem Fall ein stärkerer und damit teurer Motor verwendet werden, um die Übersetzung niedriger und damit die Stellzeit in den geforderten Grenzen zu halten und das geforderte Abtriebsmoment zu erhalten.

Ein weitere Nachteil ist es, daß bei einem stärkeren Motor auch stärkere Motorströme auftreten, wodurch zusätzlich die Steuerung der Motoren wesentlich verteuert wird. Bei der Getriebeauslegung ist daher bei vielen Anwendungen ein maximaler Strom einzuhalten. Aber auch bei einem schwächeren Gleichstrommotor besteht das Problem, daß die Stromaufnahme mit sinkender Drehzahl zunimmt.

Ein weiterer Nachteil bei einer solchen Anwendung ist es, daß bei den vielfach verwendeten Gleichstrommotoren die Drehzahl des Motors vom angeforderten Motormoment abhängt. Der Motor hat während des Verstellens eine wechselnde Drehzahl. Diese Drehzahländerungen wirken sich auf das subjektive Geräuschempfinden sehr negativ aus und werden in den geschilderten Anwendungsbeispielen in der Gebäude- und Automobiltechnik so nicht akzeptiert.

Es ist die Aufgabe der Erfindung, die oben geschilderten Nachteile zu vermeiden und eine Antriebsvorrichtung zu schaffen, bei der mit einem schwächeren Motor das geforderte Abtriebsmoment erreicht wird und gleichzeitig die Stellzeit des Getriebes reduziert ist.

Die Lösung gemäß Anspruch 1 besteht darin, daß statt eines Getriebes mit konstanter Übersetzung ein zweistufiges Getriebe verwendet wird, wobei die zweite Stufe als Unrundgetriebe ausgebildet ist und die erste Getriebestufe als Wellgetriebe ausgebildet ist, insbeosndere als ein Wellgetriebe, wie es detailliert in dem für die Anmelderin erteilten europäischen Patent EP 0 918 961 B1 beschrieben und offenbart ist. Zum Zwecke der Offenbarung wird auf den Inhalt dieser Patentschrift Bezug genommen. Die Übertragungselemente des darin beschriebenen Wellgetriebes (auch Harmonic-Drive-Getriebe genannt) sind Stößel bzw Stege.

Weiterbildungen der Erfindung sind in den Unteransprüchen angegeben.

Unrundgetreibe sind Getriebe mit nicht konstantem Übersetzungsverhältnis und als solche bereits bekannt. Ein Beispiel für ein Unrundgetreibe ist in der gattungsbildenden DE 197 39 851 A1 beschrieben. Dort wird das Getreibe für den Antrieb eines Scheibenwischers in einem Kraftfahrzeug verwendet. Das Unrundgetreibe wird hierbei ausschließlich dazu eingesetzt, eine hin- und hergehende Bewegung des Scheibenwischers auszuführen. Das dortige Unrundgetreibe wird jedoch nicht dazu eingesetzt, einen bestimmten Übersetzungsverlauf zu besitzen oder um Stellzeiten zu reduzieren.

Eine Lösung der Erfindung besteht auch in dem Verfahren, aus dem Verlauf des geforderten Abtriebsmomentes und einer gegebenen Motorkennlinie des verwendeten Antriebes den Übersetzungsverlauf so optimal zu ermitteln, daß damit die oben geschilderten Nachteile vermieden werden können. Die Optimierung unterscheidet ferner zwischen den einzelnen Arten von Elektromotoren, beispielsweise zwischen einem Gleichstrommotor oder einem Schrittmotor.

Ein besonderer Vorteil der Erfindung besteht darin, daß durch die Optimierung des Übersetzungsverlaufes bei Verwendung eines Gleichstrommotors dieser mit im wesentlicher konstanter Drehzahl über dem gesamten Verstellbereich betrieben werden kann, wodurch das Getriebegeräusch wesentlich reduziert wird.

Die Erfindung besteht ferner darin, daß jeder einzelne Getriebezahn ein eigenes beliebiges Bezugsprofil erhält, so daß jeder Zahn hinsichtlich Festigkeit, Geräusch, Spiel und Wirkungsgrad optimiert werden kann. Gerade bei nicht durch Wälzstoßen hergestellten Zahnrädern, also beispielsweise durch Spritzgießen, Sintern oder durch Räumen hergestellten Unrundgetrieben, bieten auch nicht evolventische erhebliche Vorteile auf Grund des auftretenden Unterschnittes, wenn die Krümmungen der Wälzkurven punktweise zu groß werden.

Der Ablauf der Anpassung eines Unrundgetriebes erfolgt iterativ in mehreren Schritten wie folgt:

Zuerst wird aus dem Abtriebsmomentenverlauf und der Motorkennlinie ein erster optimierter Übersetzungsverlauf ermittelt. Daraus werden die Polkurven des Unrundgetriebes ermittelt. Anschließend werden aus einem beliebigem Bezugsprofil, bei der auch jeder Zahn verschieden sein kann, die Zähne des Unrundgetriebes berechnet. Anschließend wird durch eine Abwälzsimulation die auftretende Spannung während des Verstellens und die auftretenden Wirkungsgrade ermittelt. Da der Wirkungsgradverlauf einen Einfluß auf den Drehzahlverlauf während der Stellzeit hat, muß jetzt noch einmal mit der Verzahnung der Momentenverlauf und die Stellzeit ermittelt werden.

Falls der Verlauf jetzt nicht mehr in Ordnung ist, muß eine erneute Optimierungsschleife bzw. Optimierungsberechnung durchgeführt werden, um die Wälzkurven und damit die Zähne optimal zu bestimmen und zu gestalten.

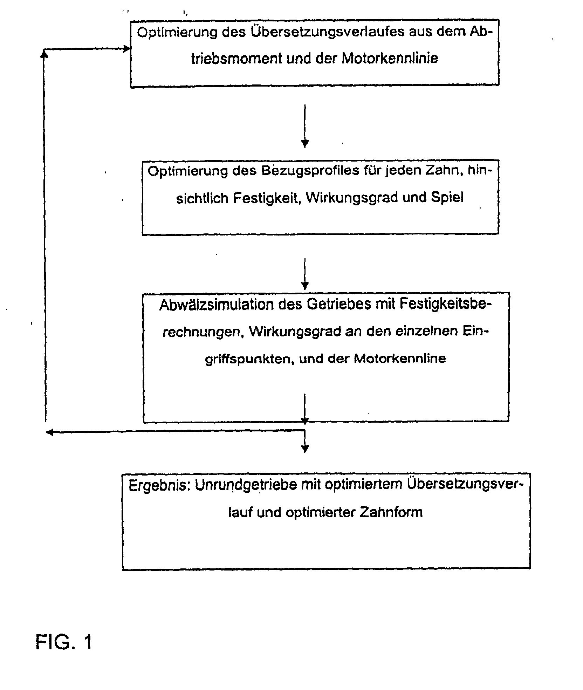

Dieser Ablauf ist detailliert nochmals in Fig. 1 in einem Flußdiagramm dargestellt. Auf den Inhalt von Fig. 1 wird ausdrücklich bezug genommen.

Auf Grund der komplexen Zusammenhänge kann die Optimierung nur noch mit einem Computerprogramm errechnet und gelöst werden.

Im folgenden soll die Optimierung eines Unrundgetriebes am Beispiel eines Gleichstrommotors mit einer gegebenen Motorkennlinie gemäß

$$M_1 = M_1(n) \text{ oder } n = n(M_1), I = I(n)$$

mit $M_1$ = Motormoment, I = Motorstrom, $n_1$= Drehzahl und einem gegebenen Abtriebsmoment

$$M_2 = M_2(\varphi_2),$$

mit $M_2$ = Abtriebsmoment, $\varphi_2$ =Abtriebsdrehwinkel aufgezeigt werden.
Ergebnis der ersten Optimierung ist ein Übersetzungsverlauf gemäß

$$i = i(\varphi_2),$$

mit i = Übersetzung, $\varphi_2$ = Abtriebsdrehwinkel.

Ferner wird die benötigte Stellzeit und die maximale Stromaufnahme vorzugsweise so weit wie möglich reduziert und es wird vorzugsweise gleichzeitig der Drehzahlverlauf des Motors und damit das Getriebegeräusch optimiert.

Um eine im wesentlichen konstante Drehzahl des Motors und damit eine Geräuschreduzierung zu erhalten, wird als Startwert für die Optimierung der Übersetzungsverlauf so gewählt, daß im wesentlichen die Motordrehzahl über der gesamten oder zumindest annähernd der gesamten Verstellzeit konstant oder weitgehend konstant bleibt.

Die Berechnung der Stellzeit des Drehzahlverlaufes und der Stromaufnahme führt auf ein Differentialgleichungssystem, das im allgemeinen nicht mehr explizit gelöst werden kann. Deswegen wird als numerisches Verfahren beispielsweise ein explizites Euler-Verfahren verwendet.

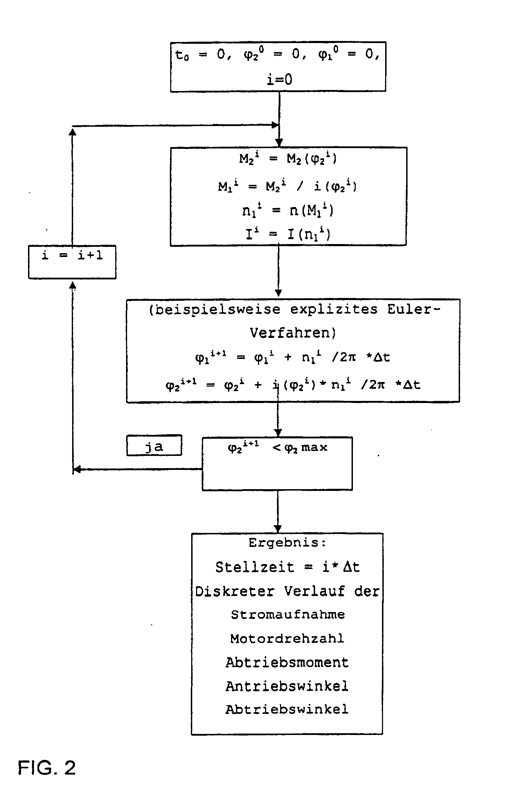

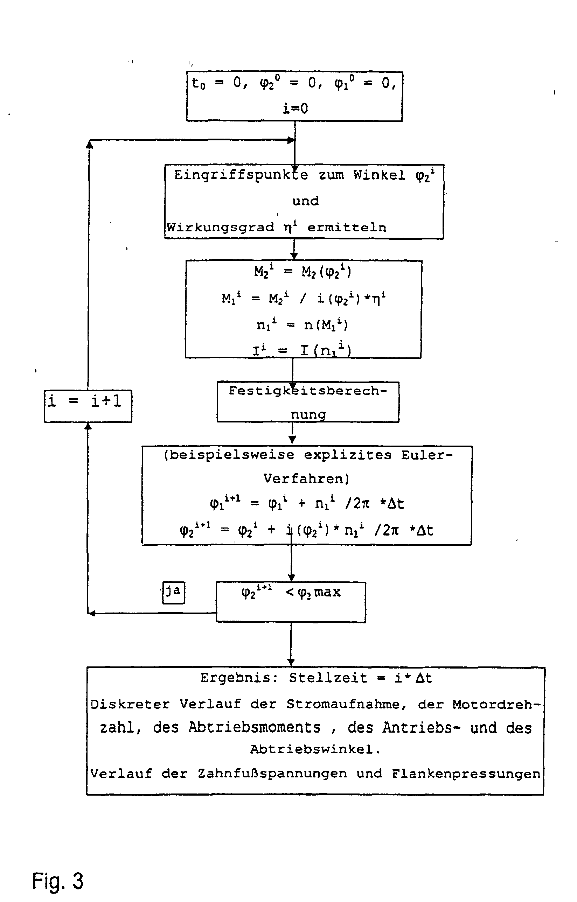

Die einzelnen Berechnungsschritte des Euler-Verfahrens sind in dem Flußdiagramm von Fig. 2 dargestellt, worauf ausdrücklich hingewiesen wird.

Aus dem Bezugsprofil der beiden Unrundräder werden als nächstes die Zahnradgeometrien bestimmt. Dann werden die auftretenden Zahnfußspannungen, Flankenpressungen und Verformungen der Zähne bei Kunststoffzahnrädern bestimmt und optimiert. Ferner wird der Wirkungsgrad an jedem Eingriffspunkt bestimmt. Im nächsten Schritt wird die Berechnung der Stellzeiten noch einmal durchgeführt, allerdings jetzt einschließlich dem Wirkungsgrad in jedem Eingriffspunkt und mit den Zahnradgeometrien.

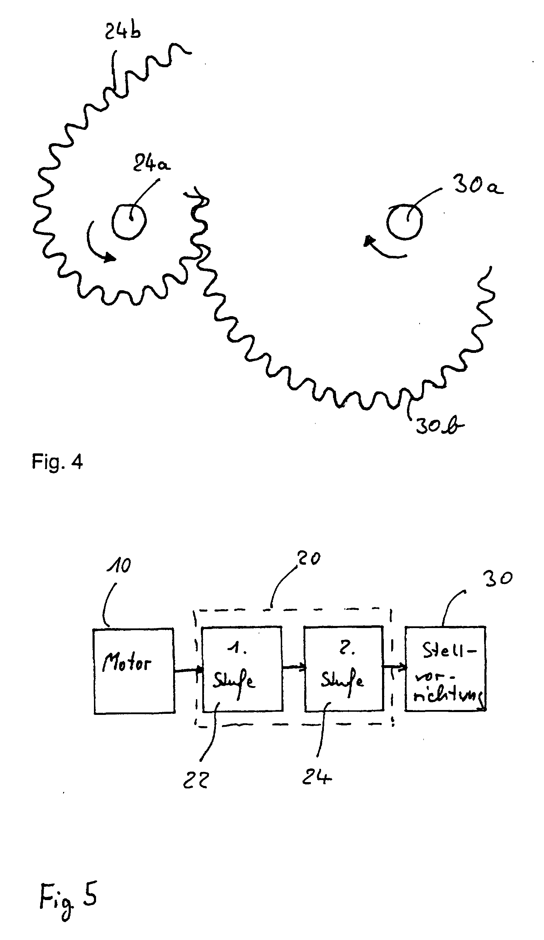

Das in Fig. 5 gezeigte Beispiel einer Antriebsvorrichtung zeigt eine Ausführung für einen Fensterschließer als Stell-vorrichtung 30 in der Gebäudetechnik mit einem im wesentlichen Cosinus-förmigen Verlauf des Abtriebsmomentes (vgl. FIG. 4). Der eingesetzte, in Fig. 5 mit dem Bezugszeichen 10 versehene Gleichstrommotor hat fast über dem gesamten Stellbereich eine konstante Drehzahl. Seine Ausgangswelle ist mit einer ersten Getriebestufe 22 und deren Ausgang mit einer zweiten Getriebestufe 24 gekoppelt. die zweite Getriebestufe 24 ist als Unrundgetriebe gestaltet. Das gesamte Getriebe ist mit 20 bezeichnet. Damit kann beispielsweise die Stellzeit um 30% und die maximale Stromaufnahme um ca. 40% verringert werden. In Fig. 4 bezeichnen 22a und 24a Wellen des Unrundgetriebes 24 bzw. der Stellvorrichtung 30 und 22b und 24b zugehörende Zahnkurven.

**Patentansprüche**

1. Antriebsvorrichtung zum Antreiben einer Stellvorrichtung mit einer zwischen einen Motor (10) und der Stellvorrichtung (30) geschalteten Getriebe (20), welches Unrundzahnräder (22a, 24a) aufweist, **dadurch gekennzeichnet, dass** das Getriebe (20) mindestens eine erste, an eine Ausgangswelle des Motors (10) gekoppelte und als Wellgetriebe ausgebildete Getriebestufe (22) und eine nachfolgende, zweite Getriebestufe (24) aufweist, wobei die zweite Getriebestufe (24) als Unrundgetriebestufe ausgebildet ist.

2. Antriebsvorrichtung nach Anspruch 1, **dadurch gekennzeichnet, daß** der Motor (10) ein Schrittmotor ist.

3. Antriebsvorrichtung nach Anspruch 1, **dadurch gekennzeichnet, daß** Motor (10) ein Gleichstrommotor ist.

4. Antriebsvorrichtung nach einem der Ansprüche 1 bis 3, **dadurch gekennzeichnet, daß** die Stellvorrichtung (30) ein Fensterschließer ist.

5. Antriebsvorrichtung nach einem der Ansprüche 1 bis 3,

**dadurch gekennzeichnet, daß** die Stellvorrichtung (30) ein Lüftungsklappensteller insbesondere innerhalb eines KfZ ist.

**6.** Antriebsvorrichtung nach einem der Ansprüche 1 bis 5,
**dadurch gekennzeichnet, daß** das Wellgetriebe Stößel bzw. Stege als Übertragungselemente aufweist.

**7.** Antriebsvorrichtung nach einem der Ansprüche 1 bis 6,
**dadurch gekennzeichnet, daß** die Antriebsvorrichtung eine Stellstrecke aufweist mit einem Verstellwinkel kleiner 360°.

**8.** Antriebsvorrichtung nach Anspruch 7,
**dadurch gekennzeichnet, daß** das Unrundgetriebe (24) so dimensioniert ist, dass im Bereich des Endes der Stellstrecke ein im Vergleich zu Beginn der Stellvorganges größeres Drehmoment auf ein Stellelement der Stelleinrichtung (30) einwirkt.

## Claims

**1.** A drive device for driving a control device with a gear (20) connected between an engine (10) and the control device (30), which comprises eccentric gear wheels (22a, 24a) ,
**characterised in that** the gear (20) comprises at least a first gear stage (22) coupled to a output shaft of the engine (10) and constructed as a harmonic drive and a following, second gear stage (24), the second gear stage (24) being constructed as an eccentric gear stage.

**2.** A drive device according to Claim 1,
**characterised in that** the engine (10) is a stepping motor.

**3.** A drive device according to Claim 1,
**characterised in that** the engine (10) is a d.c. motor.

**4.** A drive device according to one of Claims 1 to 3,
**characterised in that** the control device (30) is a window closing device.

**5.** A drive device according to one of Claims 1 to 3,
**characterised in that** the control device (30) is a ventilating valve in particular inside a motor vehicle.

**6.** A drive device according to one of Claims 1 to 5,
**characterised in that** the harmonic drive comprises tappets or planet carriers as transmission elements.

**7.** A drive device according to one of Claims 1 to 6,
**characterised in that** the drive device comprises a regulating distance having an adjustment angle of less than 360°.

**8.** A drive device according to Claim 7,
**characterised in that** the eccentric gear (24) is dimensioned so that a larger torque in comparison with the start of the regulating operation acts on a control element of the control mechanism (30) in the region of the end of the regulating distance.

## Revendications

**1.** Dispositif d'entraînement pour l'entraînement d'un dispositif de réglage avec un engrenage (20) qui présente des roues dentées excentriques (22a, 24a), montée entre un moteur (10) et le dispositif de réglage (30),
**caractérisé en ce que**
l'engrenage (20) présente au moins un premier niveau d'engrenage (22) réalisé comme un engrenage sur un arbre, couplé à un arbre de sortie du moteur (10), et un second niveau d'engrenage (24) lui faisant suite, le second niveau d'engrenage (24) étant réalisé comme un niveau d'engrenage excentrique.

**2.** Dispositif d'entraînement selon la revendication 1,
**caractérisé en ce que**
le moteur (10) est réalisé comme moteur pas à pas.

**3.** Dispositif d'entraînement selon la revendication 1,
**caractérisé en ce que**
le moteur (10) est un moteur à courant continu.

**4.** Dispositif d'entraînement selon l'une quelconque des revendications 1 à 3,
**caractérisé en ce que**
le dispositif de réglage (30) est une fermeture à fenêtre.

**5.** Dispositif d'entraînement selon l'une quelconque des revendications 1 à 3,
**caractérisé en ce que**
le dispositif de réglage (30) est un régulateur du clapet de ventilation notamment à l'intérieur d'un véhicule automobile.

**6.** Dispositif d'entraînement selon l'une quelconque des revendications 1 à 5,
**caractérisé en ce que**
l'engrenage sur arbre présente des pignons, respectivement des étais comme éléments de transmission.

**7.** Dispositif d'entraînement selon l'une quelconque des revendications 1 à 6,
**caractérisé en ce que**
le dispositif d'entraînement présente une section de réglage avec un angle de réglage plus petit que 360°.

8. Dispositif d'entraînement selon la revendication 7, **caractérisé en ce que**
l'engrenage excentrique (24) est réalisé d'une taille telle que, dans la zone de fin de la section de réglage, un couple moteur plus grand, par comparaison au début du processus de réglage, agit sur un élément de réglage du dispositif de réglage (30).

FIG. 1

$$t_0 = 0, \quad \varphi_2{}^0 = 0, \quad \varphi_1{}^0 = 0, \quad i=0$$

$$M_2{}^i = M_2(\varphi_2{}^i)$$
$$M_1{}^i = M_2{}^i \, / \, i(\varphi_2{}^i)$$
$$n_1{}^i = n(M_1{}^i)$$
$$I^i = I(n_1{}^i)$$

$$i = i+1$$

(beispielsweise explizites Euler-Verfahren)
$$\varphi_1{}^{i+1} = \varphi_1{}^i + n_1{}^i \, / 2\pi \, * \Delta t$$
$$\varphi_2{}^{i+1} = \varphi_2{}^i + i(\varphi_2{}^i) * n_1{}^i \, / 2\pi \, * \Delta t$$

ja $\qquad \varphi_2{}^{i+1} < \varphi_2 \, \text{max}$

Ergebnis:

Stellzeit $= i * \Delta t$

Diskreter Verlauf der

Stromaufnahme

Motordrehzahl

Abtriebsmoment

Antriebswinkel

Abtriebswinkel

FIG. 2

$$t_0 = 0, \quad \varphi_2{}^0 = 0, \quad \varphi_1{}^0 = 0,$$
$$i = 0$$

Eingriffspunkte zum Winkel $\varphi_2{}^i$

und

Wirkungsgrad $\eta^i$ ermitteln

$$M_2{}^i = M_2(\varphi_2{}^i)$$
$$M_1{}^i = M_2{}^i / i(\varphi_2{}^i) * \eta^i$$
$$n_1{}^i = n(M_1{}^i)$$
$$I^i = I(n_1{}^i)$$

Festigkeitsberechnung

(beispielsweise explizites Euler-
Verfahren)

$$\varphi_1{}^{i+1} = \varphi_1{}^i + n_1{}^i / 2\pi * \Delta t$$
$$\varphi_2{}^{i+1} = \varphi_2{}^i + i(\varphi_2{}^i) * n_1{}^i / 2\pi * \Delta t$$

$i = i+1$

ja

$$\varphi_2{}^{i+1} < \varphi_2 \, max$$

Ergebnis: Stellzeit = $i * \Delta t$

Diskreter Verlauf der Stromaufnahme, der Motordrehzahl, des Abtriebsmoments , des Antriebs- und des
Abtriebswinkel.

Verlauf der Zahnfußspannungen und Flankenpressungen

Fig. 3

24b

24a

30a

30b

Fig. 4

10

20

30

| Motor | 1. Stufe | 2. Stufe | Stell- vor- richtung |

22

24

Fig 5